# EUROPEAN PATENT APPLICATION

(11) **EP 4 751 987 A1**
(43) Date of publication of application: **03.06.2026**
(21) Application number: 23952433.3
(22) Date of filing: 19.09.2023
(51) Int. Cl.: B60L 53/80

(54) **ELECTRIC VEHICLE**

(71) Applicant: HONDA MOTOR CO., LTD., Tokyo 105-8404 (JP)
(72) Inventor: FURUYAMA Takuya, Tokyo 107-8556 (JP); NAKATA Keisuke, Tokyo 107-8556 (JP); KATO Seiji, Tokyo 107-8556 (JP)
(74) Representative: Kiwit, Benedikt
(86) International application number: PCT/JP2023/033917
(87) International publication number: WO 2025/062488

(57) **Abstract**

This electric vehicle (1) includes a vehicle body frame (5) having a head pipe (16) and a pair of left and right main frames (17), and a battery pack (100) disposed between the pair of left and right main frames (17), the battery pack (100) has a connector (125) configured to extract electric power for driving a driving wheel (3) to the outside, and the connector (125) is disposed on an upper portion of the battery pack (100) and disposed inside a branching portion (17f) in which the pair of left and right main frames (17) are branched off from the head pipe (16) in the vehicle body frame (5).

## Description

### TECHNICAL FIELD

The present invention relates to an electric vehicle.

### BACKGROUND ART

In recent years, attempts to realize a low-carbon or decarbonized society are gaining momentum, and research and development into electrification technology is being conducted to reduce CO₂ emissions and improve energy efficiency in vehicles.

Patent Document 1 discloses an electric motorcycle in which a high-voltage connector that connects a battery to an inverter and conducts high-voltage direct current, and a low-voltage connector that connects the battery to low-voltage parts and conducts low-voltage current that has been stepped down within a battery pack, are located in a rear portion of the battery.

Incidentally, when the battery is removed from a vehicle body, it is necessary to remove a wiring connected to the high/low voltage connectors. However, when each connector is located under a side surface or on a lower surface of the battery, as in the configuration of the above-mentioned Patent Document 1, it is difficult to reach each connector, which reduces the ease of attachment and detachment of the wiring.

### RELATED ART DOCUMENT

### PATENT DOCUMENT

Patent Document 1: Japanese Patent No. 6002233

### SUMMARY

### PROBLEMS TO BE SOLVED BY THE INVENTION

In order to solve the above-mentioned problems, the present application is directed to providing an electric vehicle capable of improving the ease of attachment and detachment of a wiring when a battery is removed from a vehicle body. This will ultimately contribute to the development of a sustainable transportation system.

### MEANS FOR SOLVING THE PROBLEM

A first aspect of the present invention provides an electric vehicle (1) including: a vehicle body frame (5) having: a head pipe (16) configured to steerably support a steering wheel (2); and a pair of left and right main frames (17) with front ends connected to the head pipe (16) and branched off on left and right sides from the head pipe (16) to extend rearward; and a battery pack (100) supported on the vehicle body frame (5) between the pair of left and right main frames (17), wherein the battery pack (100) has a connector (125) configured to extract electric power for driving a driving wheel (3) to the outside, and the connector (125) is disposed on an upper portion of the battery pack (100) and disposed inside a branching portion (17f) in which the pair of left and right main frames (17) are branched off from the head pipe (16) in the vehicle body frame (5).

According to this configuration, the connector, which outputs electric power from the battery pack, is disposed in the upper portion of the battery pack and inside the branching portion of the left and right main frames in the vehicle body frame, making it easy to access the connector from above the battery pack. Accordingly, it is possible to improve the ease of attachment and detachment of the connector. In addition, since a space with a narrow lateral width is formed between the left and right main frames inside the branching portion of the left and right main frames in the vehicle body frame, by disposing the connector portion of the battery pack in this space, the space with a lateral width away from the branching portion can be used efficiently as a disposition space for the battery main body.

According to a second aspect of the present invention, in the above-mentioned first aspect, the battery pack (100) has: the connector (125) configured to conduct electric power of a battery main body (106) to the outside; a control device (121) configured to control conduction of the connector (125); and a low voltage connector (128) configured to conduct low voltage electric power for driving the control device (121), the control device (121) allows conduction of electric power of the battery main body (106) to the outside through conduction of the low voltage connector (128), the connector (125) and the low voltage connector (128) are arranged in a vehicle upward/downward direction when seen in a side view, and the low voltage connector (128) is disposed above the connector (125).

According to this configuration, the low voltage connector configured to supply driving power to the control device is disposed above the high voltage connector configured to output the vehicle driving power to the outside. Since each of the connectors is accessed from above, the order in which the cables connected to each of the connectors are removed is specified as follows: first, the cable on the low voltage connector side is removed, and then, the cable on the high voltage connector side is removed. That is, since the cable on the high voltage connector side cannot be accessed unless the cable on the low voltage connector side, which is easily accessible, is removed, it is possible to prevent the cables from being removed in the wrong order.

According to a third aspect of the present invention, in the above-mentioned second aspect, the connector (125) has a positive electrode connector (126) connected to a positive electrode of the battery main body (106), and a negative electrode connector (127) connected to a negative electrode of the battery main body (106), and the positive electrode connector (126) and the negative electrode connector (127) are arranged in the vehicle upward/downward direction when seen in a side view and disposed at positions that do not overlap each other when seen in a plan view of the vehicle.

According to this configuration, by disposing the positive electrode connector and the negative electrode connector so that they are aligned in the upward/downward direction when seen in a side view and do not overlap each other when seen in a plan view (i.e., they are disposed offset from each other in the leftward/rightward direction), it becomes possible to dispose the connector, from which the cable is to be removed first, on the outside in the leftward/rightward direction (the removal side in the plug insertion/removal direction). For this reason, a configuration for removing the cable in a prescribed order can be easily realized. In addition, the cables connected to the connectors are also offset from each other in the leftward/rightward direction, which makes it possible to prevent the cables from interfering with each other.

According to a fourth aspect of the present invention, the positive electrode connector (126) and the negative electrode connector (127) are used to insert and remove plugs (116a, 117a) of cables (116, 117) that are connected to the connectors in the leftward/rightward direction, one of the positive electrode connector (126) and the negative electrode connector (127) is disposed to be offset to the removal side relative to the other in a plug insertion/removal direction, and a first cable (116) connected to one of the positive electrode connector (126) and the negative electrode connector (127) is routed to a second cable (117) connected to the other of the positive electrode connector (126) and the negative electrode connector (127) to pass through the removal side in the plug insertion/removal direction.

According to this configuration, in the positive electrode connector and the negative electrode connector, the first cable connected to the connector on the removal side in the plug insertion/removal direction is routed on the removal side in the plug insertion/removal direction relative to the second cable connected to the other connector, thereby defining the work order in which the second cable is removed after the first cable is removed. Accordingly, it is possible to prevent the cables from being removed in the wrong order.

### ADVANTAGE OF THE INVENTION

According to the present invention, it is possible to provide an electric vehicle capable of improving the ease of attachment and detachment of a wiring when a battery is removed from a vehicle body.

### BRIEF DESCRIPTION OF THE DRAWINGS

[FIG. 1] A left side view of an electric motorcycle (saddle riding electric vehicle) according to an embodiment of the present invention.
[FIG. 2] A left side view of a major part of the above-mentioned electric motorcycle.
[FIG. 3] A plan view (top view) of the major part of the above-mentioned electric motorcycle.
[FIG. 4] A perspective view of a battery unit of the above-mentioned electric motorcycle.
[FIG. 5] A left side view showing the inside of the above-mentioned battery unit.
[FIG. 6] An exploded perspective view of the above-mentioned battery unit.
[FIG. 7] A right side view of a cable connecting portion of the above-mentioned battery unit.
[FIG. 8] A right side view of FIG. 7 showing a state in which a positive electrode cable is removed.
[FIG. 9] A perspective view of the above-mentioned cable connecting portion.
[FIG. 10] A cross-sectional view along line X-X in FIG. 9.

### DESCRIPTION OF THE EMBODIMENTS

Hereinafter, an embodiment of the present invention will be described with reference to the accompanying drawings. Further, in the following description, directions of forward, rearward, upward, downward, leftward, rightward, and the like, are the same as directions in a vehicle described below. That is, the upward/downward direction coincides with a vertical direction, and the leftward/rightward direction coincides with a vehicle width direction. In the vehicle width direction, a direction away from a vehicle width center is referred to as outward in the vehicle width direction, and a direction approaching the vehicle width center is referred to as inward in the vehicle width direction. In addition, in the drawings used in the following description, an arrow UP indicates the upward direction, an arrow FR indicates the forward direction, and an arrow LH indicates the leftward direction. Line CL in the drawings indicates a centerline in the vehicle width direction (vehicle width center).

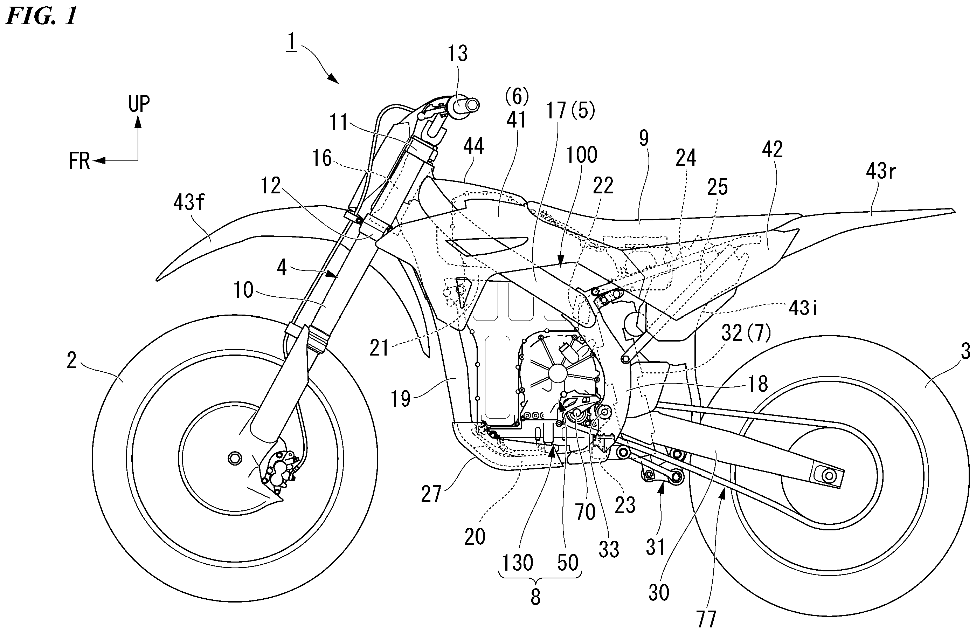

FIG. 1 is a left side view of an electric motorcycle (saddle riding electric vehicle) 1 of the embodiment.

As shown in FIG. 1, the electric motorcycle 1 of the embodiment is an off-road type saddle riding electric vehicle. The electric motorcycle 1 ensures a large up/down stroke amount for a wheel, ensures a large ground clearance for the vehicle body, achieves reduction in size and weight of the vehicle body, and achieves mass concentration in the vehicle body.

The electric motorcycle 1 includes a front wheel 2, a rear wheel 3, a front wheel suspension system 4, a vehicle body frame 5, a vehicle body cover 6, a rear wheel suspension system 7, a power unit 8, and a battery unit 100.

The front wheel suspension system 4 includes a pair of left and right front forks 10 configured to axially support the front wheel 2 on lower end portions thereof, a top bridge 11 and a bottom bridge 12 provided to bridge between upper portions of the pair of front forks 10, and a stem pipe (not shown) provided to bridge between the top bridge 11 and the bottom bridge 12 and inserted through a head pipe 16. The front wheel 2 is steerably supported on the head pipe 16 of the vehicle body frame 5 via the front wheel suspension system 4. A steering handle 13 is supported on the top bridge 11. In the embodiment, telescopic front forks 10 are used as an example of the front suspension of the electric motorcycle 1, but this configuration is not limited to this. For example, the front suspension may be of other types, such as a link type with a swing arm, or the like.

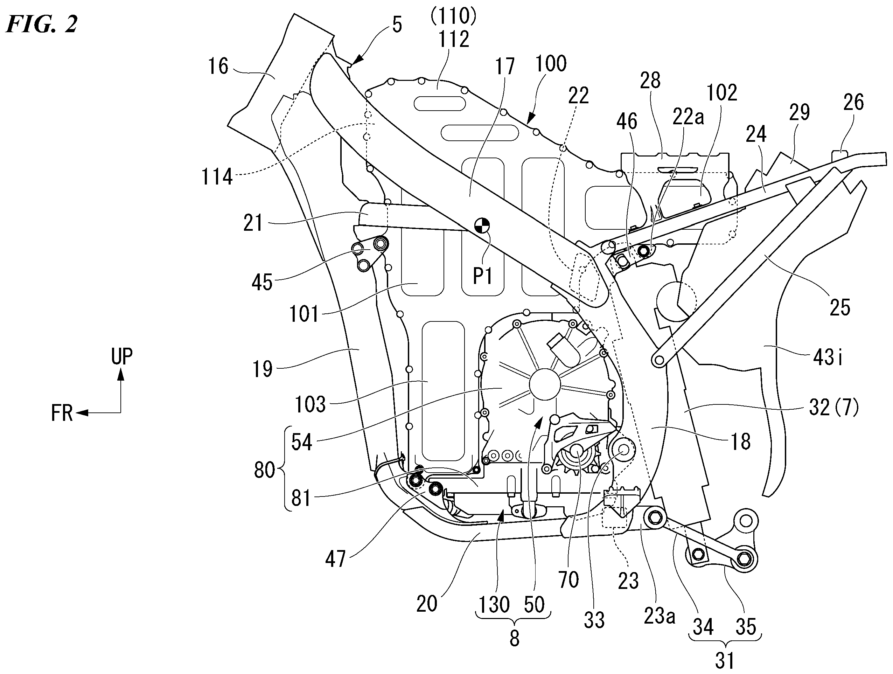

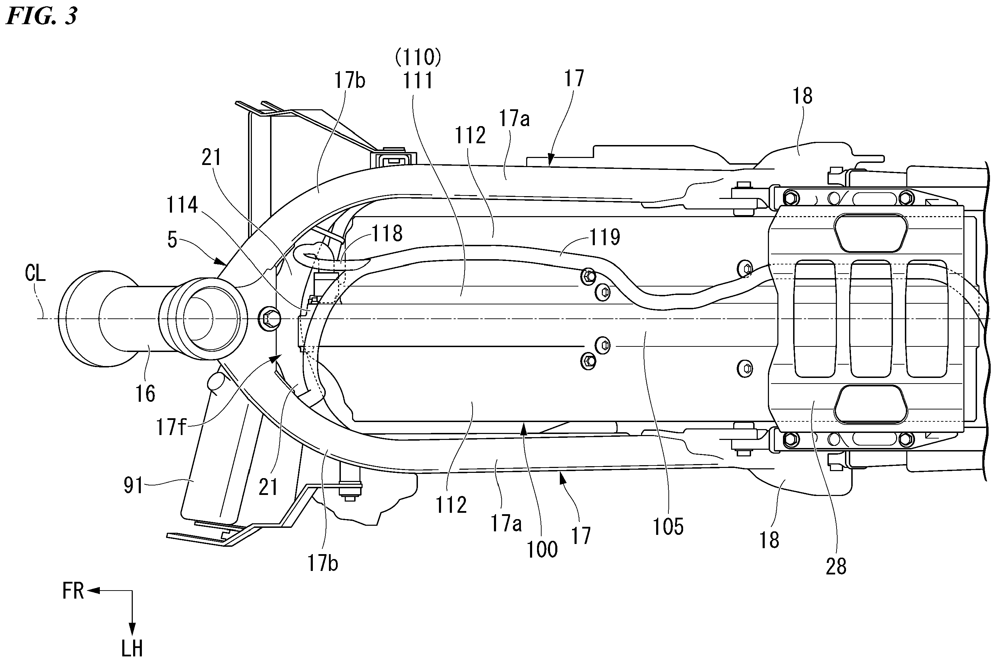

FIG. 2 is a left side view of a major part of the electric motorcycle 1, and FIG. 3 is a plan view (top view) of the major part of the electric motorcycle 1.

As shown in FIG. 1 to FIG. 3, the vehicle body frame 5 includes the head pipe 16, a pair of left and right main frames 17, a pair of left and right pivot frames 18, a single down frame 19, a pair of left and right lower frames 20, a pair of left and right gusset pipes 21, a cross member 22, and a lower cross member 23, which are coupled integrally with each other through welding or the like. Hereinafter, an assembly in which these frame members are inseparably integrated is referred to as "a frame main body."

The head pipe 16 is located on a vehicle width center CL and provided solely on a front end of the vehicle body frame 5. The head pipe 16 is inserted through the stem pipe and rotatably supported.

The pair of main frames 17 are branched off on left and right sides from an upper portion of the head pipe 16 and extend rearward and downward. The pair of main frames 17 are coupled to each other on front end portions thereof. Front portions of the pair of main frames 17 extend while being curved to bulge outward in the vehicle width direction behind the head pipe 16 when seen in a plan view from above. Rear portions of the pair of main frames 17 extend linearly in the forward/rearward direction when seen in a plan view from above.

The pair of pivot frames 18 extend rearward and downward from the rear end portions of the main frames 17 on the same left and right sides, respectively. The pair of pivot frames 18 extends while being curved rearward to form a convex arc shape when seen in a side view. A pivot shaft 33 extending in the vehicle width direction bridges between intermediate portions of the pair of pivot frames 18 near the lower portion in the upward/downward direction. Further, "intermediate" used in the embodiment means including not only a center between both ends of an object, but also an inner range between both ends of the object.

The down frame 19 extends rearward and downward from a lower portion of the head pipe 16. The down frame 19 extends rearward and downward at a steeper angle than the main frames 17 when seen in a side view. A radiator 91 configured to cool the power unit 8 is attached to at least one of left and right side portions of the down frame 19 (in the embodiment, the left side portion).

The pair of lower frames 20 are branched off on left and rights from the lower end portion of the down frame 19 and extend downward. Rear end portions of the pair of lower frames 20 are connected to lower end portions of the pivot frames 18 on the same left and right sides, respectively.

The pair of gusset pipes 21 are connected to the main frames 17 on the same left and right sides and the down frame 19. The pair of gusset pipes 21 are branched off on left and right sides from the intermediate portion of the down frame 19 near the upper portion in the upward/downward direction and extend rearward. Rear end portions of the pair of gusset pipes 21 are connected to the intermediate portions of the main frames 17 in the forward/rearward direction on the same left and right sides, respectively.

The cross member 22 extends in the vehicle width direction and connects the rear portions of the pair of main frames 17 (or the upper portions of the pair of pivot frames 18). A cushion support bracket 22a extending rearward and upward is fixedly provided on an inner side of the cross member 22 in the vehicle width direction. An upper end portion of a rear cushion 32 is connected to the cushion support bracket 22a.

The lower cross member 23 extends in the vehicle width direction and connects the lower portions of the pair of pivot frames 18 below the pivot shaft 33. A link support bracket 23a extending rearward is fixedly provided on an inner side of the lower cross member 23 in the vehicle width direction. A front end portion of a link arm 34 is connected to the link support bracket 23a.

The vehicle body frame 5 further includes a pair of left and right seat rails 24, and a pair of left and right support rails 25. The front end portions of the left and right seat rails 24 are connected to the upper end portions of the pivot frames 18 on the same left and right sides, respectively. Each of the left and right seat rails 24 extends rearward and upward from the front end portions. A seat 9 is disposed above the left and right seat rails 24. Longitudinal intermediate portions of the left and right seat rails 24 are connected via a seat support bracket 28 that receives a load from the seat 9.

The left and right support rails 25 are located below the left and right seat rails 24. The front end portions of the left and right support rails 25 are connected to vertical intermediate portions of the pivot frames 18 on the same left and right sides. Each of the left and right support rails 25 extends rearward and upward from the front end portion. The rear end portions of the left and right support rails 25 are connected to the rear portions of the seat rails 24 on the same left and right sides from below, respectively.

The rear portions of the left and right seat rails 24 are connected by a cross rail 26 extending in the vehicle width direction. The pair of left and right seat rails 24, the pair of left and right support rails 25 and the cross rail 26 are coupled integrally through welding or the like. Hereinafter, an assembly in which these frame members are inseparably integrated is referred to as a sub-frame, which is detachably attached to the frame main body. The sub-frame corresponds to a seat frame that supports the seat 9 from below.

The vehicle body frame 5 is a semi-double cradle type. The vehicle body frame 5 mounts the power unit 8, which includes a motor 50, below the rear portions of the left and right main frames 17 behind the head pipe 16 and in front of the left and right pivot frames 18. The vehicle body frame 5 surrounds the power unit 8 from the front and below by the single down frame 19 and the left and right lower frames 20.

The power unit 8 allowing traveling of the vehicle is mounted inside the vehicle body frame 5, as well as the battery unit 100 for storing electric power to be supplied to the power unit 8. The vehicle body frame 5 allows the battery unit 100 to be inserted and removed from above through an opening between the left and right main frames 17. The front portions of the left and right main frames 17 and the left and right gusset pipes 21 have increased curvature outward in the vehicle width direction to ensure clearance with the front portion of the battery unit 100.

The vehicle body cover 6 covers the vehicle body frame 5 and the like. The vehicle body cover 6 includes a pair of left and right front side cowls 41, and a pair of left and right rear side cowls 42.

The pair of front side cowls 41 are disposed from positions below both left and right sides of the front portion of the seat 9 to a position overlapping the upper portion of the down frame 19 when seen in a side view in the vehicle width direction. Each of the front side cowls 41 extends forward from below the front portion of the seat 9 in a flared shape when seen in a side view. Each of the front side cowls 41 extends across the left and right main frames 17 to and fro on the same side, outward in the vehicle width direction. At least one of the front side cowls 41 functions as a wind guide plate (radiator shroud) to the radiator 91 supported on the side portion of the down frame 19.

The pair of rear side cowls 42 are disposed at positions below both left and right sides of the rear portion of the seat 9 when seen in a side view. The rear side cowls 42 are positioned to cover the seat rails 24 and the support rails 25 on the same left and right sides from the outside in the vehicle width direction.

Behind the seat 9, a rear fender 43r extends rearward. The rear fender 43r is disposed above the rear wheel 3 with an interval between them. Reference sign 43f in the drawings indicates a front fender disposed above the front wheel 2 with an interval and supported on the bottom bridge 12.

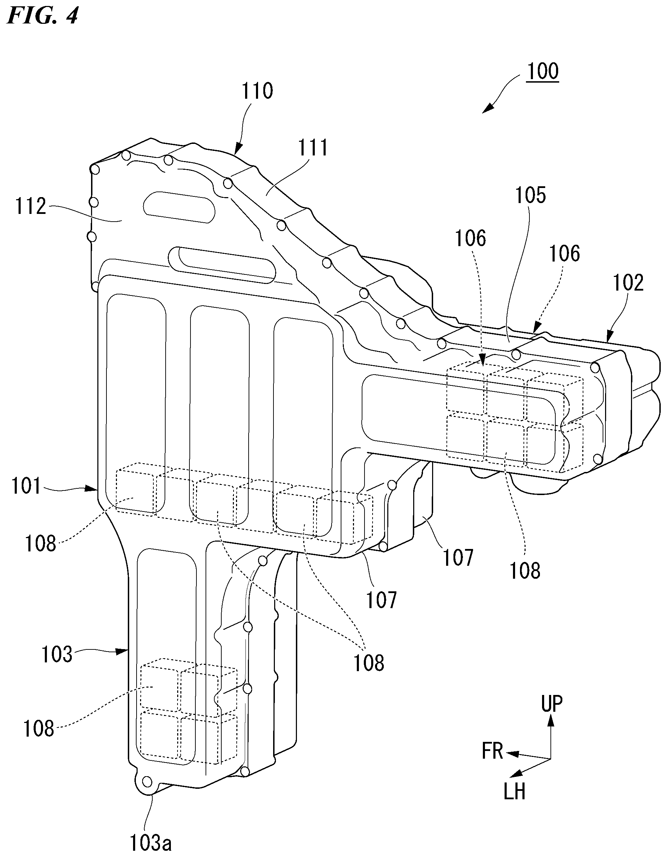

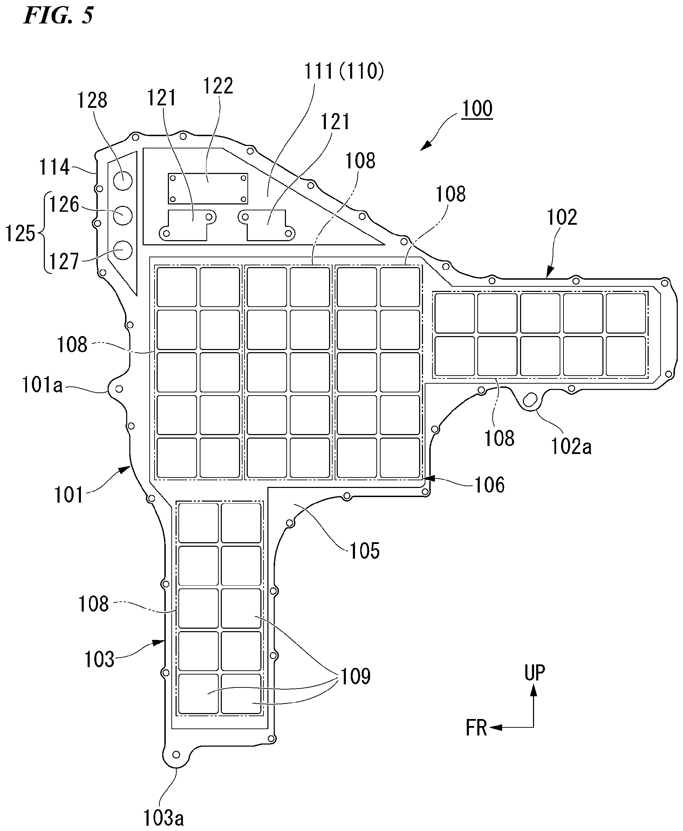

A top cover 44 is disposed in front of the seat 9 between upper end portions of longitudinal intermediate portions of the pair of front side cowls 41. The top cover 44 covers an upward protrusion 110 (see FIG. 4 and FIG. 5) of the battery unit 100 from above.

The rear wheel suspension system 7 includes a swing arm 30 configured to axially support the rear wheel 3 on a rear end portion thereof, a link mechanism 31 configured to connect a front portion of the swing arm 30 and the lower cross member 23, and the rear cushions 32 that bridges between the link mechanism 31 and the cross member 22.

The swing arm 30 is disposed below a vehicle body rear portion and extends in the forward/rearward direction. The front end portion of the swing arm 30 is vertically swingably supported on the pair of pivot frames 18 via the pivot shaft 33.

The link mechanism 31 includes a pair of left and right link arms 34, and a link member 35. The pair of link arms 34 are disposed below the front portion of the swing arm 30 when seen in a side view and extends in the forward/rearward direction. Front end portions of the link arms 34 are pivotably connected to the link support bracket 23a of the lower cross member 23 via a shaft in the vehicle width direction. Rear end portions of the link arms 34 are pivotably connected to the link member 35 via a shaft in the vehicle width direction.

The link member 35 is formed in a substantially triangular shape when seen in a side view. An upper top portion of the link member 35 is pivotably connected to link connecting portions of longitudinal intermediate portions of the swing arm 30 via a shaft in the vehicle width direction. A lower top portion of the link member 35 is pivotably connected to rear end portions of the link arms 34 via a shaft in the vehicle width direction. A front top portion of the link member 35 is swingably connected to a lower end portion of the rear cushions 32 via a shaft in the vehicle width direction.

The rear cushions 32 is provided on an inner side of the vehicle body rear portion in the vehicle width direction (for example, on the vehicle width center CL). The rear cushion 32 is formed in a cylindrical shape with a compression coil spring arranged around an outer periphery of a damper cylinder, and is positioned with the axial direction tilted forward relative to the vertical direction. The upper end portion of the rear cushions 32 is pivotably connected to the cushion support bracket 22a of the cross member 22 via a shaft in the vehicle width direction. The lower end portion of the rear cushions 32 is pivotably connected to the front top portion of the link member 35 via a shaft in the vehicle width direction. In the embodiment, although the rear cushions 32 is shown as a single cushion provided on the inside in the vehicle width direction, the present invention is not limited to this configuration. For example, other configurations may be possible, such as a configuration in which the pair of left and right rear cushions 32 are provided between the rear portion of the swing arm 30 and the seat frame.

The power unit 8 includes the motor 50 for driving the vehicle, a reducer (not shown) configured to reduce output of the motor 50, an output shaft 70 configured to output power of the motor 50 reduced by the reducer, a power control unit (PCU) 130 configured to control the motor 50, and a housing 80 configured to accommodate driving parts such as the motor 50, the reducer, and the like, and the PCU 130.

The power unit 8 is configured as an integrated unit including the motor 50, the reducer, the output shaft 70, the PCU 130 and the housing 80. The PCU 130 is disposed below the motor 50. The housing 80 forms appearance of the power unit 8. The power unit 8 can be cooled by a water cooling system including the radiator 91.

The motor 50 is arranged with its rotation axis direction aligned with the vehicle width direction. The motor 50 is accommodated in a motor case 54 formed in the upper portion of the housing 80. A gear type reducer is disposed on one of left and right sides of the motor 50.

The output shaft 70 is disposed on a rear lower portion of the motor case 54. The output shaft 70 extends in the vehicle width direction, with its left end portion protruding outside the housing 80. The left end portion of the output shaft 70 and the rear wheel 3 are connected via a chain type power transmission mechanism 77. Accordingly, the output of the motor 50 can be transmitted to the rear wheel 3.

The PCU 130 is a control device including a power drive unit (PDU) that is a motor driver, an electric control unit (ECU) configured to control the PDU, or the like. The PDU includes an inverter that converts the current supplied from the battery unit 100 from direct current to alternating current, which is then supplied to the motor 50. The PCU 130 is accommodated in a PCU case 81 of the housing 80.

The housing 80 includes the PCU case 81 configured to accommodate the PCU 130, in addition to the motor case 54. The PCU case 81 is disposed below the motor case 54. The PCU case 81 accommodates the PCU 130 therein. A front portion of the PCU case 81 protrudes forward from a front end portion of the motor case 54.

The power unit 8 (the housing 80) is supported on the vehicle body frame 5 via a plurality of fixing parts (including a rubber mount). The power unit 8 is located in front (inner peripheral side) of the pivot frames 18, which are curved in a convex arc shape rearward when seen in a side view. The power unit 8 is disposed above the lower frames 20. The power unit 8 is disposed below rear lower end portions of the main frames 17 when seen in a side view.

The power unit 8 has an upper portion (the motor case 54) disposed at a distance behind the down frame 19, and a lower portion (the PCU case 81) extending to the vicinity of the lower end portion of the down frame 19. A lower side of the PCU case 81 is covered by an under cover 27 attached to the lower frames 20.

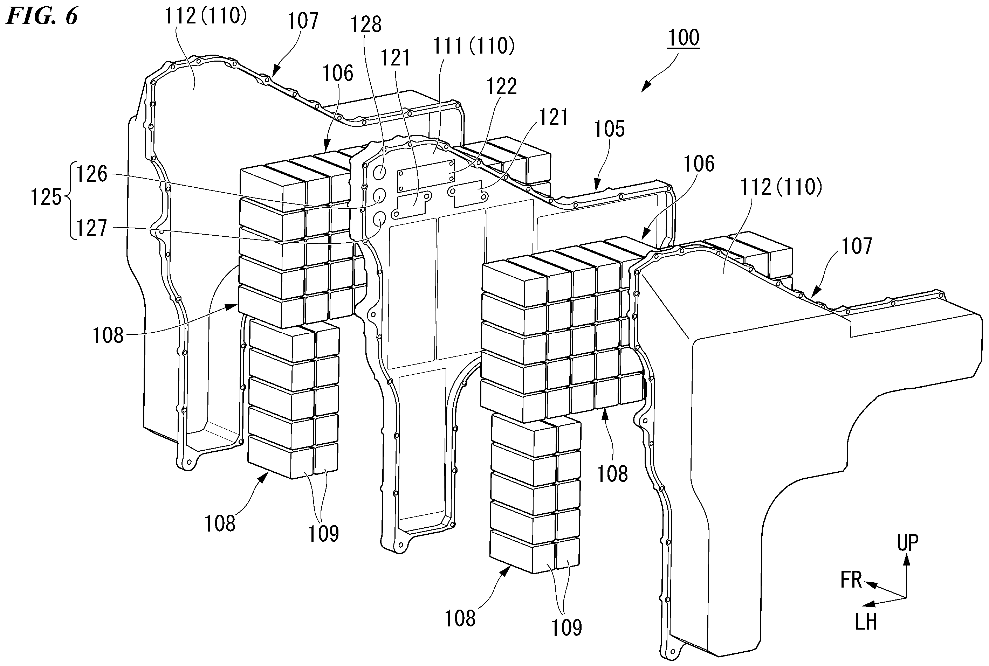

FIG. 4 is a perspective view of the battery unit 100, FIG. 5 is a left side view showing the inside of the battery unit 100, and FIG. 6 is an exploded perspective view of the battery unit 100.

As shown in FIG. 1 to FIG. 6, the battery unit 100 is formed in substantially an L shape when seen in a side view, and is arranged from the front to the top of the power unit 8. The battery unit 100 has a constant lateral width overall and is positioned to fit between inner side surfaces in the vehicle width direction of the left and right main frames 17 when seen in a plan view. The battery unit 100 includes a central portion (main part) 101 that is roughly square-shaped when seen in a side view and is positioned so as to overlap the main frames 17, a rearward extension part 102 that extends rearward from the rear end of the central portion 101, and a downward extension part 103 that extends downward from the lower end of the central portion 101.

The central portion 101 is positioned so that, when seen in a side view, the rear upper portion protrudes above the main frames 17 and the front lower portion protrudes below the main frames 17. Upwardly protruding parts of the main frames 17 in the central portion 101 are covered from the outside in the vehicle width direction by the rear portions of the front side cowls 41. The main frames 17 are arranged diagonally across the central portion 101 on the outside in the vehicle width direction. The front end portion of the central portion 101 is supported by a vertical intermediate portion of the down frame 19 via a first mount bracket 45. Reference sign 101a in the drawings indicates a first mount portion provided on a front end portion of the central portion 101.

The rearward extension part 102 extends rearward between the upper end portion of the rear cushion 32 and the lower surface of the seat 9 in the upward/downward direction. The rearward extension part 102 extends rearward to a position overlapping longitudinal intermediate portions of the seat rails 24 when seen in a side view. The seat support bracket 28 is formed in a C-shape so as to straddle the rearward extension part 102 from above to the left and right. A lower end portion of the rearward extension part 102 is supported on the cross member 22 via a second mount bracket 46. The second mount bracket 46 is formed integrally with, for example, the cushion support bracket 22a. Reference sign 102a in the drawings indicates a second mount portion provided on the lower end portion of the rearward extension part 102.

A 12V battery 29 for auxiliary equipment is disposed further behind the rearward extension part 102. The 12V battery 29 is supported on the rear portion of the seat frame. Reference sign 43i in the drawings indicates a rear inner fender that is supported by the support rails 25 and prevents the rear wheel 3 from rolling up.

The downward extension part 103 extends downward between the lower portion of the down frame 19 and the motor case 54 of the power unit 8 in the forward/rearward direction. The downward extension part 103 extends to the vicinity of the upper surface of the PCU case 81. The lower end portion of the downward extension part 103 is supported on the front end portions of the left and right lower frames 20 via a third mount bracket 47. Reference sign 103a in the drawings indicates a third mount portion provided on the lower end portion of the downward extension part 103.

The battery unit 100 includes a center plate 105 located on the vehicle width center CL, a pair of left and right battery assemblies (battery main bodies) 106 disposed on both left and right sides of the center plate 105, and a pair of left and right battery covers 107 configured to cover the left and right battery assemblies 106. The battery unit 100 is provided symmetrically from left to right as a whole with the vehicle width center CL as the axis of symmetry. By arranging the battery unit 100, which is a heavy article, symmetrically on the left and right, the effect of the vehicle weight on the lateral balance is reduced.

Each of the battery assemblies 106 is formed by assembling a plurality of battery modules 108. Each of the battery modules 108 has a roughly rectangular parallelepiped shape that is long in one direction, and is arranged with the lengthwise direction aligned in the forward/rearward direction or the upward/downward direction. Each of the battery modules 108 is formed by arranging a plurality of battery cells 109 vertically and horizontally. The battery cells 109, and therefore the battery modules 108, are aligned in the vehicle width direction.

Each of the battery modules 108 has a slim profile that is long in one direction, making it easy to arrange even in a small space. The battery unit 100 can easily be formed into a shape that fits into the available space in the vehicle body by rearranging the plurality of battery modules 108 to change the overall outer shape. By increasing the degree of freedom in the shape of the battery unit 100, which is a heavy article, and increasing the degree of freedom in disposition in the available space of the vehicle body, the impact on the center of gravity of the vehicle body can be reduced.

The central portion 101 formed in a square shape when seen in a side view is formed by, for example, disposing the three battery modules 108 with the lengthwise direction facing the upward/downward direction and disposing the three the battery modules 108 side by side in the forward/rearward direction. The rearward extension part 102 formed in a rectangular shape when seen in a side view is formed by disposing the one battery module 108 with the lengthwise direction facing the forward/rearward direction. The downward extension part 103 formed in a rectangular shape when seen in a side view is formed by disposing the one battery module 108 with the lengthwise direction facing the upward/downward direction. Reference sign P1 in FIG. 2 indicates a central position of the appearance of the central portion 101 when seen in a side view.

The upper end portion of the battery unit 100 is provided with the upward protrusion 110 that accommodates electrical parts such as a contactor (control device) 121, a control board 122, and the like. The upward protrusion 110 protrudes above the main frames 17 when seen in a side view, and is covered from above by the top cover 44. The upward protrusion 110 includes a plate extension part 111 that extends the upper end portion of the center plate 105 upward beyond the upper end of the battery assemblies 106. Electrical parts such as the contactor 121 and the like are attached to both left and right sides of the plate extension part 111. The upper end portions of the left and right battery covers 107 are provided with cover extension parts 112 extending upward from the upper ends of the battery assemblies 106 to fit the plate extension part 111. The left and right cover extension parts 112 cover the plate extension part 111 from the left and right outside, reducing the exposure of electrical components such as the contactor 121 and the like to the outside of the vehicle.

The rear portions of the plate extension part 111 and the left and right cover extension parts 112 are located below the front portion of the seat 9, which is inclined upward toward the front. The rear upper portions of the plate extension part 111 and the left and right cover extension parts 112 are formed in a sloping shape that slopes upward toward the front when seen in a side view, in accordance with the slope of the front portion of the seat 9. The outer side portions of the left and right cover extension parts 112 in the vehicle width direction are formed in a chamfered shape that is inclined so that the outer sides in the vehicle width direction are positioned lower. Accordingly, the upward protrusion 110 is less bulky, and the top cover 44 has a rounded compact shape.

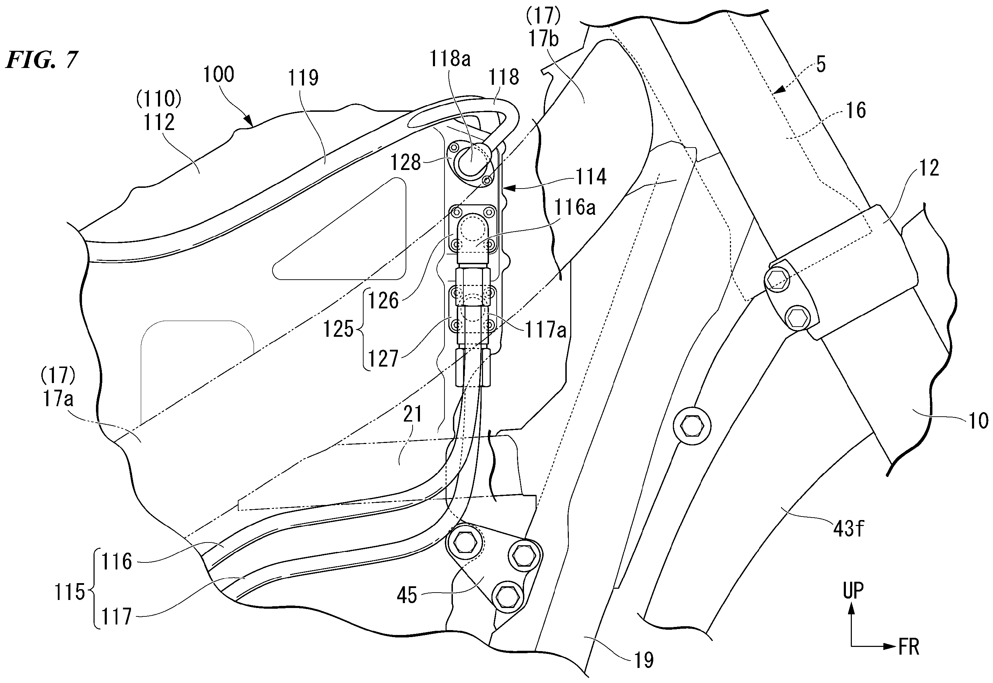

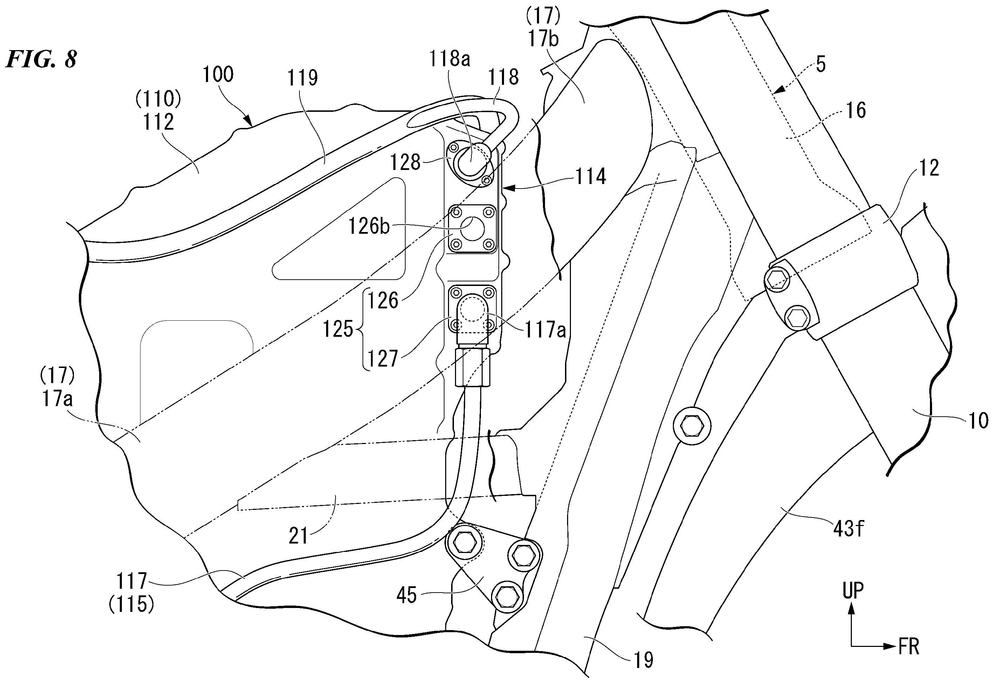

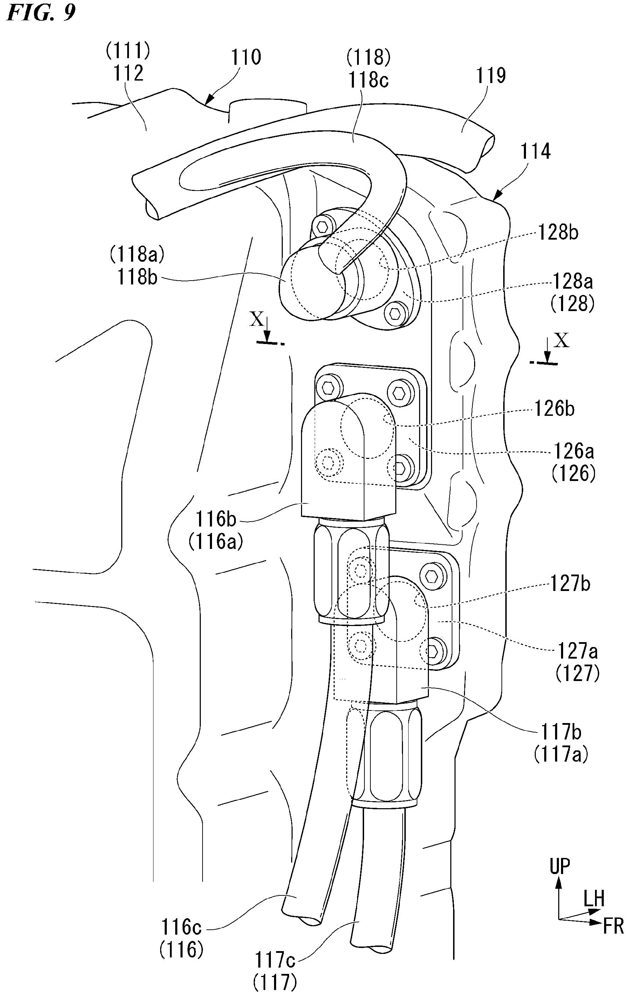

FIG. 7 and FIG. 8 are right side views showing a cable connecting portion 114 of the front end portion of the battery unit 100, and FIG. 9 is a perspective view of the cable connecting portion 114.

Referring to FIG. 7 to FIG. 9, the front end portion of the battery unit 100 is provided with the upward protrusion 110 and the cable connecting portion 114 that protrudes forward from the front end portion above the central portion 101. The cable connecting portion 114 is connected to one end (a positive electrode plug 116a and a negative electrode plug 117a) of a high voltage cable 115 (a positive electrode cable 116 and a negative electrode cable 117) extending from the PCU 130, and to one end (a low voltage plug 118a) of a low voltage cable 118 extending from the 12V battery 29.

The high voltage cable 115 enables the battery unit 100 to supply the driving current for traveling the vehicle to the PCU 130. The low voltage cable 118 is a branch harness that branches off from a main harness 119 connected to the 12V battery 29, and enables the supply of driving current for driving electrical parts from the 12V battery 29 to the electrical parts such as the contactor 121 and the like. The contactor 121 is a normally open relay that receives driving current from the 12V battery 29, connecting the circuit between the battery assemblies 106 and a high voltage connector 125. The contactor 121 interrupts the circuit between the battery assemblies 106 and the high voltage connector 125 by interrupting the driving current from the 12V battery 29. The control board 122 controls the electric power output from the high voltage connector 125 to the outside.

### <Connector structure>

Referring to FIG. 7 to FIG. 9, the cable connecting portion 114 of the front end portion of the battery unit 100 is equipped with the high voltage connector 125, which enables electric power to be extracted externally (to the PCU 130) to drive the driving wheel (the rear wheel 3) of the vehicle, and a low voltage connector 128, which enables electric power to be supplied externally (to the 12V battery 29) to drive the electrical parts such as the contactor 121 and the like. The high voltage connector 125 includes a positive electrode connector 126 connected to the positive electrode of the battery main body, and a negative electrode connector 127 connected to the negative electrode of the battery main body.

The cable connecting portion 114 including each of the connectors 125 and 128 is disposed on the upper portion of the battery unit 100 (for example, above a central position P1 (see FIG. 2)).

Here, referring to FIG. 3, the main frame 17 includes an extension portion 17a extending linearly in the vehicle forward/rearward direction when seen in a plan view, and a front curved portion 17b extending to be curved inward from the front end portion of the extension portion 17a in the vehicle width direction when seen in a plan view. Hereinafter, a range from the head pipe 16 to the rear end portion of the front curved portion 17b in the vehicle forward/rearward direction is referred to as a branching portion 17f from which the left and right main frames 17 are branched off behind the head pipe 16 in the vehicle body frame 5.

The cable connecting portion 114 is disposed inside the branching portion 17f of the vehicle body frame 5 (between the left and right front curved portions 17b when seen in a plan view, a position overlapping the front curved portion 17b when seen in a side view).

The high voltage connector 125 (the positive electrode connector 126 and the negative electrode connector 127) and the low voltage connector 128 are disposed side by side in the vehicle upward/downward direction when seen in a side view. The connectors are arranged in the following order from top to bottom: the low voltage connector 128, the positive electrode connector 126, and the negative electrode connector 127. The high voltage connector 125 and the low voltage connector 128 are arranged to at least partially overlap each other in the forward/rearward direction when seen in a side

view.

The positive electrode connector 126 and the negative electrode connector 127 are arranged side by side in the vehicle upward/downward direction when seen in a side view. The connectors 126 and 127 are arranged such that the positive electrode connector 126 is on top and the negative electrode connector 127 is on the bottom. The connectors 126 and 127 may be arranged such that the negative electrode connector 127 is on top and the positive electrode connector 126 is on the bottom. The positive electrode connector 126 and the negative electrode connector 127 are positioned to at least partially overlap each other in the forward/rearward direction when seen in a side view.

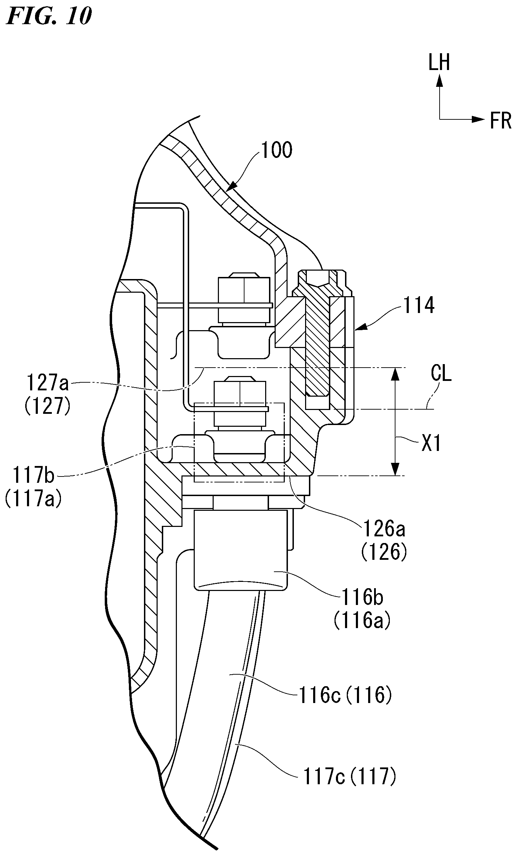

FIG. 10 is a cross-sectional view along line X-X in FIG. 9.

Referring to FIG. 9 and FIG. 10, the positive electrode connector 126 and the negative electrode connector 127 are arranged not to overlap each other when seen in a plan view of the vehicle. The positive electrode connector 126 located above is offset by an amount X1 to the right side in the vehicle leftward/rightward direction (the removal side in the plug insertion/removal direction) relative to the negative electrode connector 127 located below. The offset amount X1 corresponds to the displacement in the vehicle width direction between the opening forming surfaces 126a and 127a of the positive electrode connector 126 and the negative electrode connector 127. An opening forming surface 128a of the low voltage connector 128 is provided above the opening forming surface 126a of the positive electrode connector 126, for example, flush with the surface. Each of the opening-forming surfaces 126a, 127a, and 128a is provided on the side surface of the cable connecting portion 114 facing rightward in the vehicle leftward/rightward direction.

The opening-forming surfaces 126a, 127a, and 128a form connector openings 126b, 127b, and 128b that opens to the right, respectively. The plugs 116a, 117a, and 118a of the cables 116, 117, and 118 are inserted into and removed from the connector openings 126b, 127b, and 128b, respectively, from the right side along the vehicle leftward/rightward direction. Each of the plugs 116a, 117a and 118a is provided at one end portion of each of the cables 116, 117 and 118. Each of the plugs 116a, 117a, and 118a includes plug main bodies 116b, 117b, and 118b that are integrated in the extension direction of each of the cables 116, 117, and 118, and a plug terminal (not shown) that is arranged on the side surface of each of the plug main bodies 116b, 117b, and 118b in a direction perpendicular to the extension direction.

The plugs 116a, 117a, and 118a each allow the plug terminal to be inserted into or removed from the connector openings 126b, 127b, and 128b of the connectors 126, 127, and 128 from the right side along the vehicle leftward/rightward direction (plug insertion/removal direction). The positive electrode plug 116a and the negative electrode plug 117a are attached to the positive electrode connector 126 and the negative electrode connector 127, respectively, with cable main bodies 116c and 117c extending downward. The low voltage plug 118a is attached to the low voltage connector 128 in a specified orientation (for example, with a cable main body 118c extending diagonally forward and upward) that avoids the downward direction (the positive electrode plug 126 side).

The offset amount X1 in the plug insertion/removal direction between the positive electrode connector 126 and the negative electrode connector 127 is greater than a protrusion height toward the removal side (rightward) of the negative electrode plug 117a (the plug main body 117b) attached to the negative electrode connector 127 displaced toward the insertion side (leftward) in the plug insertion/removal direction. Accordingly, the positive electrode cable 116 connected to the positive electrode connector 126 displaced to the removal side in the plug insertion/removal direction is routed so as to pass through the removal side of the negative electrode cable 117 connected to the negative electrode connector 127 displaced to the insertion side in the plug insertion/removal direction.

For this reason, the plug 116a and the cable main body 116c of the positive electrode cable 116 are prevented from interfering with the plug 117a and the cable main body 117c of the negative electrode cable 117. In addition, in a state in which the negative electrode cable 117 is attached to the negative electrode connector 127, the positive electrode cable 116 can be attached to and detached from the positive electrode connector 126. On the contrary, in a state in which the positive electrode cable 116 is attached to the positive electrode connector 126, the attachment and detachment of the negative electrode cable 117 to the negative electrode connector 127 is restricted. Accordingly, the order in which the cables 116 and 117 are attached to and detached from the positive electrode connector 126 and the negative electrode connector 127 is necessarily specified. For this reason, it is possible to reduce errors in the work procedures when attaching and detaching the battery unit 100.

As described above, the electric motorcycle 1 according to the above-mentioned embodiment is the electric vehicle including the vehicle body frame 5 having the head pipe 16 configured to steerably support the steering wheel (the front wheel 2) and the pair of left and right main frames 17 with the front ends connected to the head pipe 16 and branched off on left and right sides from the head pipe 16 to extend rearward, and the battery unit 100 supported on the vehicle body frame 5 between the pair of left and right main frames 17, the battery unit 100 having the high voltage connector 125 configured to extract electric power for driving the driving wheel (the rear wheel 3) to the outside, and the high voltage connector 125 being disposed on the upper portion of the battery unit 100 and disposed inside the branching portion 17f in which the pair of left and right main frames 17 are branched off from the head pipe 16 in the vehicle body frame 5.

According to this configuration, the high voltage connector 125, which outputs electric power from the battery unit 100, is disposed in the upper portion of the battery unit 100 and inside the branching portion 17f of the left and right main frames 17 in the vehicle body frame 5, making it easy to access the high voltage connector 125 from above the battery unit 100. Accordingly, it is possible to improve the ease of attachment and detachment of the high voltage connector 125. In addition, since a space with a narrow lateral width is formed between the left and right main frames 17 inside the branching portion 17f of the left and right main frames 17 in the vehicle body frame 5, by disposing the high voltage connector 125 of the battery unit 100 in this space, the space with a lateral width away from the branching portion 17f can be used efficiently as a disposition space for the battery main body.

In the above-mentioned electric motorcycle 1, the battery unit 100 has the high voltage connector 125 configured to conduct electric power of the battery main body (the battery assemblies 106) to the outside, the control device (the contactor 121) configured to control conduction of the high voltage connector 125, and the low voltage connector 128 configured to conduct low voltage electric power for driving the control device, the control device allows conduction of electric power of the battery main body to the outside through conduction of the low voltage connector 128, the high voltage connector 125 and the low voltage connector 128 are arranged in the vehicle upward/downward direction when seen in a side view, and the low voltage connector 128 is disposed above the high voltage connector 125.

According to this configuration, the low voltage connector 128 configured to supply driving power to the control device is disposed above the high voltage connector 125 configured to output the vehicle driving power to the outside. Since each of the connectors 125 and 128 is accessed from above, the order in which the cables 115 and 118 connected to each of the connectors 125 and 128 are removed is specified as follows: first, the cable 118 on the low voltage connector 128 side is removed, and then, the cable 125 on the high voltage connector 115 side is removed. That is, since the cable 115 on the high voltage connector 125 side cannot be accessed unless the cable 118 on the low voltage connector 128 side, which is easily accessible, is removed, it is possible to prevent the cables 115 and 118 from being removed in the wrong order.

In the above-mentioned electric motorcycle 1, the high voltage connector 125 has the positive electrode connector 126 connected to the positive electrode of the battery main body, and the negative electrode connector 127 connected to the negative electrode of the battery main body, and the positive electrode connector 126 and the negative electrode connector 127 are arranged in the vehicle upward/downward direction when seen in a side view and disposed at positions that do not overlap each other when seen in a plan view of the vehicle.

According to this configuration, by disposing the positive electrode connector 126 and the negative electrode connector 127 so that they are aligned in the upward/downward direction when seen in a side view and do not overlap each other when seen in a plan view (i.e., they are disposed offset from each other in the leftward/rightward direction), it becomes possible to dispose the connector, from which the cable is to be removed first, on the outside in the leftward/rightward direction (the removal side in the plug insertion/removal direction). For this reason, a configuration for removing the cable in a prescribed order can be easily realized. In addition, the cables 116 and 117 connected to the connectors 126 and 127 are also offset from each other in the leftward/rightward direction, which makes it possible to prevent the cables 116 and 117 from interfering with each other.

In the above-mentioned electric motorcycle 1, the positive electrode connector 126 and the negative electrode connector 127 are used to insert and remove the plugs (116a, 117a) of the cables (116, 117) that are connected to the connectors in the leftward/rightward direction, one of the positive electrode connector 126 and the negative electrode connector 127 (the positive electrode connector 126) is disposed to be offset to the removal side relative to the other (the negative electrode connector 127) in the plug insertion/removal direction, and the first cable (the positive electrode cable 116) connected to one of the positive electrode connector 126 and the negative electrode connector 127 (the positive electrode connector 126) is routed to the second cable (the negative electrode cable 117) connected to the other of the positive electrode connector 126 and the negative electrode connector 127 (the negative electrode connector 127) to pass through the removal side in the plug insertion/removal direction.

According to this configuration, in the positive electrode connector 126 and the negative electrode connector 127, the first cable (the positive electrode cable 116) connected to the connector (the positive electrode connector 126) on the removal side in the plug insertion/removal direction is routed on the removal side in the plug insertion/removal direction relative to the second cable (the negative electrode cable 117) connected to the other connector (the negative electrode connector 127), thereby defining the work order in which the second cable is removed after the first cable is removed. Accordingly, it is possible to prevent the cables from being removed in the wrong order.

Further, the present invention is not limited to the above-mentioned embodiment, and for example, the configuration of this embodiment may be applied to saddle riding vehicles other than motorcycles. The term "saddle riding vehicle" includes all vehicles in which a driver straddles the vehicle body, including not only motorcycles (including mopeds and scooter-type vehicles), but also vehicles with three-wheeled vehicles (including vehicles with one front wheel and two rear wheels, as well as vehicles with two front wheels and one rear wheel) or four-wheeled vehicles (such as four-wheeled buggies).

Then, the configurations in the above-mentioned embodiment are examples of the present invention, and various modifications are possible within the scope of the present invention, such as replacing components of the embodiments with well-known components.

### BRIEF DESCRIPTION OF THE REFERENCE SYMBOLS

1 Electric motorcycle (electric vehicle)
2 Front wheel (steering wheel)
3 Rear wheel (driving wheel)
5 Vehicle body frame
16 Head pipe
17 Main frame
17f Branching portion
100 Battery unit (battery pack)
106 Battery assembly (battery main body)
116 Positive electrode cable (cable, first cable)
116a Positive electrode plug (plug)
117 Negative electrode cable (cable, second cable)
117a Negative electrode plug (plug)
121 Contactor (control device)
125 High voltage connector (connector)
126 Positive electrode connector
127 Negative electrode connector
128 Low voltage connector

## Claims

1. An electric vehicle (1) comprising:
a vehicle body frame (5) having:
a head pipe (16) configured to steerably support a steering wheel (2); and
a pair of left and right main frames (17) with front ends connected to the head pipe (16) and branched off on left and right sides from the head pipe (16) to extend rearward; and
a battery pack (100) supported on the vehicle body frame (5) between the pair of left and right main frames (17),
wherein the battery pack (100) has a connector (125) configured to extract electric power for driving a driving wheel (3) to the outside, and
the connector (125) is disposed on an upper portion of the battery pack (100) and disposed inside a branching portion (17f) in which the pair of left and right main frames (17) are branched off from the head pipe (16) in the vehicle body frame (5).

2. The electric vehicle according to claim 1, wherein the battery pack (100) has:
the connector (125) configured to conduct electric power of a battery main body (106) to the outside;
a control device (121) configured to control conduction of the connector (125); and
a low voltage connector (128) configured to conduct low voltage electric power for driving the control device (121),
the control device (121) allows conduction of electric power of the battery main body (106) to the outside through conduction of the low voltage connector (128),
the connector (125) and the low voltage connector (128) are arranged in a vehicle upward/downward direction when seen in a side view, and
the low voltage connector (128) is disposed above the connector (125).

3. The electric vehicle according to claim 2, wherein the connector (125) has a positive electrode connector (126) connected to a positive electrode of the battery main body (106), and a negative electrode connector (127) connected to a negative electrode of the battery main body (106), and
the positive electrode connector (126) and the negative electrode connector (127) are arranged in the vehicle upward/downward direction when seen in a side view and disposed at positions that do not overlap each other when seen in a plan view of the vehicle.

4. The electric vehicle according to claim 3, wherein the positive electrode connector (126) and the negative electrode connector (127) are used to insert and remove plugs (116a, 117a) of cables (116, 117) that are connected to the connectors in the leftward/rightward direction,
one of the positive electrode connector (126) and the negative electrode connector (127) is disposed to be offset to the removal side relative to the other in a plug insertion/removal direction, and
a first cable (116) connected to one of the positive electrode connector (126) and the negative electrode connector (127) is routed to a second cable (117) connected to the other of the positive electrode connector (126) and the negative electrode connector (127) to pass through the removal side in the plug insertion/removal direction.
